# EUROPÄISCHE PATENTSCHRIFT

(11) **EP 3 249 478 B1**
(45) Veröffentlichungstag und Bekanntmachung des Hinweises auf die Patenterteilung: **16.08.2023**
(21) Anmeldenummer: 17164731.6
(22) Anmeldetag: 04.04.2017
(51) Int. Cl.: G05B 19/042, G06F 21/60, G06F 21/62, G01G 23/01

(54) **VERFAHREN ZUR KONFIGURATION EINES FELDGERÄTS FÜR DEN EINSATZ IM EICHPFLICHTIGEN VERKEHR UND EIN SOLCHES FELDGERÄT**
METHOD FOR CONFIGURING A FIELD DEVICE FOR USE IN LEGAL METROLOGY AND SUCH A FIELD DEVICE
PROCÉDÉ DE CONFIGURATION D'UN DISPOSITIF DE TERRAIN SOUMIS À ÉTALONNAGE ET DISPOSITIF DE TERRAIN

(30) Priorität: 24.05.2016 DE 102016109598
(43) Veröffentlichungstag der Anmeldung: 29.11.2017
(73) Patentinhaber: Krohne Messtechnik GmbH, 47058 Duisburg (DE)
(72) Erfinder: Brockhaus, Helmut, 46145 Oberhausen (DE); Kunze, Johannes, 44892 Bochum (DE); Mathies, Nicolaus, 47443 Moers (DE)
(74) Vertreter: Gesthuysen Patentanwälte

(56) Entgegenhaltungen:
- EP-A1- 0 911 618
- WO-A1-02/16891
- DE-A1-102006 052 486
- DE-A1-102007 013 333
- DE-A1-102008 010 864
- DE-A1-102013 109 096

## Beschreibung

Die Erfindung betrifft ein Verfahren zur Konfiguration eines Feldgeräts für den Einsatz im eichpflichtigen Verkehr, wobei das Feldgerät eine Recheneinheit und einen Speicher aufweist, wobei in dem Speicher Parameter und/oder Funktionen abgespeichert sind, wobei die Parameter und/oder Funktionen zumindest teilweise konfigurierbar sind. Darüber hinaus betrifft die Erfindung auch ein solches Feldgerät, also ein Feldgerät für den Einsatz im eichpflichtigen Verkehr.

Ein Verfahren gemäß dem Oberbegriff des Anspruchs 1 und ein Feldgerät gemäß dem Oberbegriff des Anspruchs 8 werden in den Druckschriften DE 10 2013 109096 A1 und DE 10 2008 010864 A1 offenbart.

In der Druckschrift DE 10 2013 109096 A1 ist ein Verfahren zum Betreiben eines Feldgerätes offenbart, bei dem ein Feldgerät einen ersten und einen zweiten Betriebsmodus aufweist. Im ersten Betriebsmodus führt das Feldgerät ein Ablaufprogramm aus. Im zweiten Betriebsmodus, der alternativ oder simultan zum ersten Betriebsmodus aktivierbar ist, ist das Feldgerät reprogrammierbar, wobei hier wenigstens ein Wert eines Parameters, der die Ausführung des Ablaufprogramms beeinflusst, veränderbar ist. Zudem lehrt die DE 10 2013 109096 A1, jede Veränderung zu dokumentieren, sodass keine unbemerkte Veränderung vorgenommen werden kann.

In der Druckschrift DE 10 2008 010 864 A1 wird ein Verfahren zur Konfiguration eines Feldgeräts mit einer dynamischen Regelung von Zugriffsrechten zur Änderung von Parametern des Feldgerätes, um Fehler, die bei einem Zugriff auf das Feldgerät auftreten können, zu vermeiden, offenbart. Dabei wird zum einen berücksichtigt, in welchem Betriebszustand sich das Feldgerät befindet und, zum anderen, von welchem Bedienwerkzeug eine Zugriffsanfrage gestellt wird.

Verfahren zur Konfiguration von Feldgeräten für den Einsatz im eichpflichtigen Verkehr und Feldgeräte für den Einsatz im eichpflichtigen Verkehr sind aus dem Stand der Technik in vielerlei Ausgestaltungen bekannt. Bei derartigen Feldgeräten handelt es sich üblicherweise um Messgeräte, die in einem physikalisch-technischen Prozess, beispielsweise in einer industriellen Produktionsanlage, verbaut sind. Bei den Feldgeräten kann es sich beispielsweise um Durchfluss-, Druck- und Analysemessgeräte oder dergleichen handeln. An Messungen im eichpflichtigen Verkehr werden besondere Anforderungen gestellt, beispielsweise weil ein lauterer Handelsverkehr sichergestellt werden muss oder weil die Messsicherheit im Bereich des öffentlichen Interesses liegt, beispielsweise dadurch bedingt, dass eine mengenmäßige Steuer auf das transportierte und entnommene Medium erhoben wird.

Eichpflichtige Messungen unterliegen einer Vielzahl an gesetzlichen und institutionellen Bestimmungen, durch die eine besondere Sicherheit der Messungen gewährleistet wird. Beispielhaft zu nennen sind Bestimmungen der internationalen Organisation für das gesetzliche Messwesen (Organisation Internationale de Métrologie Légale (OIML)), hier beispielsweise die Richtlinie OIML R 117 für Messsysteme für andere Flüssigkeiten als Wasser. Empfehlungen der OIML fließen häufig in nationale Normen ein und finden so weitreichende Beachtung. Eine europäische Richtlinie, die sich mit den Voraussetzungen zur Zulassung eines Messgeräts für den eichpflichtigen Verkehr befasst, ist die Richtlinie 2004/22/EG der Europäischen Union.

Eine zentrale Eigenschaft von Messgeräten für den eichpflichtigen Verkehr ist ihre Manipulationssicherheit. Es muss mit großer Wahrscheinlichkeit ausgeschlossen werden können, dass ein Messgerät für den eichpflichtigen Verkehr von außen derart manipuliert wird, dass seine Messgenauigkeit nicht mehr sichergestellt ist bzw. die Messung verfälscht wird. Dies könnte beispielsweise dadurch geschehen, dass die für das Messgerät von einer hoheitlichen Prüfstelle festgestellten und in dem Messgerät abgelegten Kalibrierparameter überschrieben werden. Eine derartige Manipulation ist jedenfalls insoweit zu verhindern, als dass eine Manipulation mit technischen Mitteln erschwert wird und eine einmal erfolgte Manipulation jedenfalls eindeutig erkennbar ist.

Es ist bekannt, dass das Öffnen von Messgeräten bzw. der Gehäuse dieser Messgeräte durch ein Siegel verhindert wird, sodass eine Beeinflussung des Messgeräts durch den Bruch des Siegels erst ermöglicht und damit nachweisbar wird. Moderne Messgeräte sind häufig gar nicht mehr ohne Weiteres zu öffnen, beispielsweise aufgrund von getroffenen Explosionsschutzmaßnahmen.

Bevor durch die zuvor beschriebene Maßnahme eine Manipulation des Feldgeräts verhindert wird, besteht jedoch die Möglichkeit, das Feldgerät zu konfigurieren, beispielsweise indem die für die unmittelbare Messung erforderlichen Eichparameter in dem Feldgerät hinterlegt werden, die Schnittstellen des Feldgeräts konfiguriert werden oder auch die lokale Anzeige konfiguriert wird. Allgemein gilt also, dass alle Parameter und Funktionen, die einen Einfluss auf die eichpflichtig relevante Messfunktion (z. B. Kalibrierdaten, Simulationsfunktionen) haben oder sich auf die Ausgabe der eichpflichtig relevanten Messwerte auswirken (z. B. Konfiguration der I/O-Schnittstellen oder der lokalen Anzeige), vor einer nachträglichen Veränderung zu schützen sind.

Aus dem Stand der Technik ist bekannt, dass nach Abschluss der Konfiguration von Parametern und/oder Funktionen des Feldgeräts - häufig durch den Eichbeamten - sämtliche eichpflichtigen Parameter und/oder Funktionen für eine weitere Beeinflussung gesperrt werden, also die Obermenge aller in jedem erdenklichen Fall eichpflichtigen Parameter und/oder Funktionen des Feldgeräts geschützt werden. Es hat sich herausgestellt, dass diese Handhabung des Schutzes von eichpflichtigen Parametern und/oder Funktionen sehr unflexibel und teilweise nachteilig für den Einsatz derartiger Feldgeräte ist.

Es ist daher Aufgabe der vorliegenden Erfindung, das eingangs genannte Verfahren zur Konfiguration eines Feldgeräts für den Einsatz im eichpflichtigen Verkehr und das entsprechende Feldgerät so auszugestalten, dass eine flexiblere Konfiguration von eichpflichtigen Parametern und/oder Funktionen ermöglicht ist.

Die zuvor hergeleitete und aufgezeigte Aufgabe wird durch ein Verfahren gemäß Anspruch 1 gelöst.

Durch die Bereitstellung von mehreren Sperrgruppen ist es grundsätzlich möglich, verschiedene Auswahlen von Parametern und/oder Funktionen des Feldgeräts zu bilden, sodass es folglich Sperrgruppen mit einer unterschiedlichen Zuordnung von Parametern und/oder Funktionen gibt. Dabei ist es durchaus möglich, dass ein Parameter und/oder eine Funktion des Feldgeräts mehr als einer Sperrgruppe zugeordnet ist. Durch die Bereitstellung mehrerer Sperrgruppen mit einer unterschiedlichen Auswahl an eichpflichtigen Parametern und/oder Funktionen wird ein hohes Maß an Flexibilität bei der Konfiguration eines eichpflichtigen Feldgeräts geschaffen. Es besteht keine Notwendigkeit mehr, sämtliche - also alle im Feldgerät erdenklichen - eichpflichtigen Parameter und/oder Funktionen zu sperren, vielmehr ist es mit dem dargestellten Verfahren möglich, auch nur eine Auswahl von eichpflichtigen Parametern und/oder Funktionen gegen eine nach der Sperrung erfolgende Manipulation zu sichern. Die anderen, nicht eichpflichtig zu sperrenden Parameter und/oder Funktionen können dann auch nachträglich beeinflusst und konfiguriert werden.

Nach der Auswahl einer oder auch mehrerer Sperrgruppen erfolgt eine Auswertung der ausgewählten Sperrgruppen durch die Recheneinheit, sodass in dem Feldgerät die insgesamt getroffene Auswahl aller zu sperrenden Parameter und/oder die Auswahl aller zu sperrenden Funktionen bekannt ist. Sobald ein Parameter und/oder eine Funktion auch nur in einer ausgewählten Sperrgruppe auftritt, wird dieser Parameter und/oder diese Funktion für eine spätere Veränderung gesperrt. Für die Sperrung der in den ausgewählten Sperrgruppen enthaltenen Parameter und/oder Funktionen sorgt wiederum die Recheneinheit, die entsprechend programmiert ist.

Gemäß einer bevorzugten Ausgestaltung des erfindungsgemäßen Verfahrens ist vorgesehen, dass die Sperrgruppen in dem Speicher des Feldgeräts bereitgestellt werden oder die Sperrgruppen in einem Speicher eines an das Feldgerät anzuschließenden Bediengeräts bereitgestellt werden. Im ersten Fall erfolgt die Auswahl aus den bereitgestellten Sperrgruppen üblicherweise über eine Anzeige des Feldgeräts. Im zweiten Fall erfolgt die Auswahl von Sperrgruppen aus den insgesamt bereitgestellten Sperrgruppen über die Anzeige eines an das Feldgerät angeschlossenen Bediengeräts. Alternativ kann das Feldgerät die Information über die bereitzustellenden Sperrgruppen auch von dem externen Bediengerät erhalten. Für den Fall, dass die insgesamt bereitgestellten Sperrgruppen in dem Speicher des Feldgeräts bereitgestellt werden, ist es auch möglich, dass diese Informationen an ein angeschlossenes Bediengerät übertragen werden und eine Auswahl der Sperrgruppen - oder auch nur einer Sperrgruppe - über das Bediengerät erfolgt. Im Ergebnis bedeutet das, dass gemäß einer bevorzugten Ausgestaltung der Erfindung die Sperrgruppen von einer Anzeige des Feldgeräts oder von einer Anzeige eines in das Feldgerät anzuschließenden Bediengeräts auswählbar angezeigt werden.

Gemäß einer vorteilhaften Weiterbildung des erfindungsgemäßen Verfahrens bzw. des erfindungsgemäßen Feldgeräts ist vorgesehen, dass die Recheneinheit den Zustand eines Sperrelements des Feldgeräts auswertet und die Recheneinheit erst in einem definierten Sperrzustand des Sperrelements die in den ausgewählten Sperrgruppen enthaltenen Parameter und/oder Funktionen für eine spätere Veränderung sperrt. Bei einem solchen Sperrelement kann es sich beispielsweise um einen in dem Feldgerät angeordneten Schalter handeln - oder auch um mehrere Schalter -, der zur Kenntlichmachung der Sperrung bzw. Freigabe in bestimmte Positionen verbracht wird (Sperrposition/Freigabeposition). In diesem Fall wird die Position des Schalters von der Recheneinheit des Feldgerätes ausgewertet.

Gemäß einer bevorzugten Ausgestaltung ist weiterhin vorgesehen, dass die Recheneinheit nach Erkennen des Sperrzustands des Sperrelements auch eine Änderung der ausgewählten Sperrgruppen sperrt. So wird auch verhindert, dass durch eine vorgelagerte, indirekte Aktion, nämlich die Auswahl einer Sperrgruppe, Einfluss genommen wird auf die Beeinflussbarkeit eines eigentlich zu sperrenden Parameters oder einer eigentlich zu sperrenden Funktion des Feldgeräts.

Vorzugsweise ist das Verfahren zur Konfiguration eines Feldgeräts bzw. das Feldgerät für den Einsatz im eichpflichtigen Verkehr so ausgestaltet, dass die Sperrgruppen nach funktionalen Kriterien gegliedert sind, dass nämlich unter den auswählbaren Sperrgruppen wenigstens eine Sperrgruppe ist, die Parameter und/oder Funktionen eines Bereichs der folgenden Bereiche umfasst: Anzeige, Sensor (Messfunktion), I/O-Schnittstellen, Sicherheitsfunktionalität. Eine derartige Gliederung der Sperrgruppen ermöglicht insbesondere eine funktional-selektive Konfiguration der nachträglichen Beeinflussbarkeit bzw. Nicht-Beeinflussbarkeit der Parameter und/oder Funktionen des Feldgeräts.

Bei vielen Anwendungen ist meist nur ein Teil der I/O-Schnittstellen oder die lokale Anzeige des Feldgeräts in der interessierenden eichpflichtigen Anwendung genutzt, sodass nichts gegen eine nachträgliche Beeinflussbarkeit der anderen Parameter und/oder Funktionen des Feldgeräts spricht. Je nach Einsatzgebiet im eichpflichtigen Verkehr müssen ggfs. verschiedene I/O-Schnittstellen nach Setzen des Sperrelements und beispielsweise einer Eichplombe dauerhaft manipulationssicher sein. Dazu ist es jetzt möglich, je nach Anwendungsgebiet, unterschiedliche Parameter und/oder Funktionen gegen eine nachträgliche Veränderung zu sperren. Ist beispielsweise bei einem Trinkwasserzähler lediglich die Anzeige, die der Abrechnung dient, eine eichpflichtige Funktion des Feldgeräts, können bei anderen Anwendungen eichpflichtige Funktionen, die gegen nachträgliche Manipulation zu sichern sind, hinzukommen. Dies kann beispielsweise der Fall sein, wenn der Messwert des Feldgeräts über I/O-Schnittstellen nach außen auszugeben ist, was auch eine Sperrung der betreffenden I/O-Schnittstelle erforderlich macht.

Vorstehend hergeleitete Aufgabe wird auch durch ein Feldgerät gemäß Anspruch 8 gelöst.

Das Feldgerät ist insgesamt so programmiert, dass es in der Lage ist, die Aspekte des zuvor geschilderten Verfahrens zur Konfiguration eines Feldgerätes für den Einsatz im eichpflichtigen Verkehr durchzuführen. D. h., dass das Feldgerät in seinen verschiedenen Ausgestaltungen und Weiterbildungen dadurch gekennzeichnet ist,
- dass die Sperrgruppen in dem Speicher des Feldgeräts bereitgestellt sind oder die Sperrgruppen in einem Speicher eines an das Feldgerät anzuschließenden Bediengeräts bereitgestellt sind,
- dass die Sperrgruppen von einer Anzeige des Feldgeräts oder von einer Anzeige eines an das Feldgerät anschließbaren Bediengeräts auswählbar angezeigt werden,
- dass die Recheneinheit den Zustand eines Sperrelements des Feldgeräts auswertet und die Recheneinheit erst in einem definierten Sperrzustand des Sperrelements die in den ausgewählten Sperrgruppen enthaltenen Parameter und/oder Funktionen für eine spätere Veränderung sperrt,
- dass die Recheneinheit nach Erkennen des Sperrzustands des Sperrelements auch eine Änderung der ausgewählten Sperrgruppen sperrt,
- dass die Sperrgruppen nach funktionalen Kriterien gegliedert sind, dass unter den auswählbaren Sperrgruppen wenigstens eine Sperrgruppe ist, die Parameter und/oder Funktionen eines der folgenden Bereiche umfasst: Anzeige, Sensor, I/O-Schnittstellen, Sicherheitsfunktionalitäten und
- dass in wenigstens einer übergeordneten Sperrgruppe mehrere Sperrgruppen zusammengefasst sind und durch Auswahl der übergeordneten Sperrgruppe alle Sperrgruppen ausgewählt werden, die in der übergeordneten Sperrgruppe zusammengefasst sind.

Die vorstehend aufgelisteten Merkmale können alleine für sich oder in Kombination realisiert werden.

Im Einzelnen gibt es nun eine Vielzahl von Möglichkeiten, das erfindungsgemäße Verfahren bzw. das erfindungsgemäße Feldgerät für den eichpflichtigen Verkehr auszugestalten und weiterzubilden. Vorteilhafte Ausgestaltungen ergeben sich jeweils aus den abhängigen Patentansprüchen und aus den Figu-ren mit der nachfolgenden Beschreibung. In der Zeichnung zeigt:
- Fig. 1: schematisch ein Verfahren zur Konfiguration eines Feldgeräts für den Einsatz im eichpflichtigen Verkehr sowie ein diesbezügliches Feldgerät und
- Fig. 2: die Darstellung von bereitgestellten und auswählbaren Sperrgruppen in der Anzeige eines Feldgeräts bzw. eines an das Feldgerät angeschlossenen Bediengeräts.

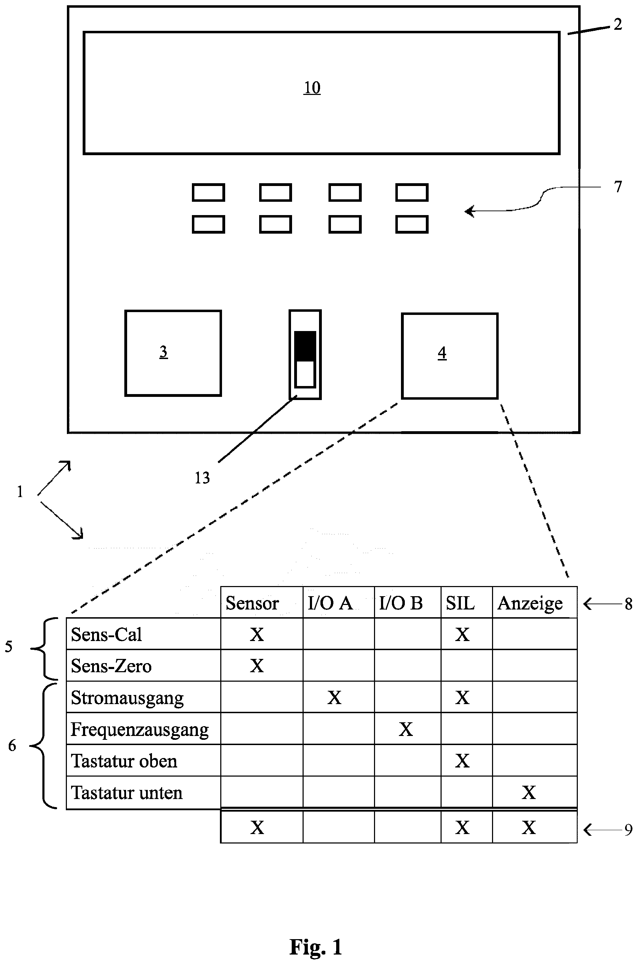

Fig. 1 zeigt ein Verfahren 1 zur Konfiguration eines Feldgeräts 2 für den Einsatz im eichpflichtigen Verkehr, wobei das Feldgerät 2 eine Recheneinheit 3 und einen Speicher 4 aufweist, wobei in dem Speicher 4 Parameter 5 und Funktionen 6 abgespeichert sind, wobei die Parameter 5 und die Funktionen 6 zumindest teilweise konfigurierbar sind.

In Fig. 1 ist symbolisch dargestellt, dass die Parameter 5 und die Funktionen 6 tabellarisch aufgelistet sind, wobei es sich bei den Parametern 5 um Kalibrier-Parameter allgemein (Sens-Cal) sowie um speziell den Nullpunkt der Kalibrierung handelt (Sens-Zero). Bei den Funktionen handelt es sich um einen Stromausgang, einen Frequenzausgang und um die Belegung einer Tastatur 7 , wobei die obere Zeile (Tastatur oben) und die untere Zeile (Tastatur unten) der Tastatur 7 separat als Funktion vorliegen.

In Fig. 1 ist nun zu sehen, dass mehrere Sperrgruppen 8 bereitgestellt werden, vorliegend die Sperrgruppen 8 "Sensor", "I/O A", "I/O B", "SIL" und "Anzeige". Jede Sperrgruppe 8 umfasst wenigstens einen Parameter 5 und/oder wenigstens eine Funktion 6 des Feldgeräts 2.

Bei dem vorgeschlagenen Verfahren wird wenigstens eine der Sperrgruppen 8 ausgewählt, im vorliegenden Fall sind die Sperrgruppen "Sensor", "SIL" und "Anzeige" ausgewählt worden. Die ausgewählten Sperrgruppen 9 werden von der Recheneinheit 3 ausgewertet, wobei die Recheneinheit 3 die in den ausgewählten Sperrgruppen 9 enthaltenen Parameter 5 und Funktionen 6 für eine spätere Veränderung sperrt.

In dem dargestellten Ausführungsbeispiel gemäß Fig. 1 sind die Sperrgruppen 8 in dem Speicher 4 des Feldgeräts 2 bereitgestellt. Es ist auch denkbar, dass die Sperrgruppen 8 zunächst in einem Speicher eines an das Feldgerät anzuschließenden Bediengeräts bereitgestellt werden, wobei dann auch eine Auswahl der Sperrgruppen auf der Anzeige des angeschlossenen Bediengeräts erfolgt.

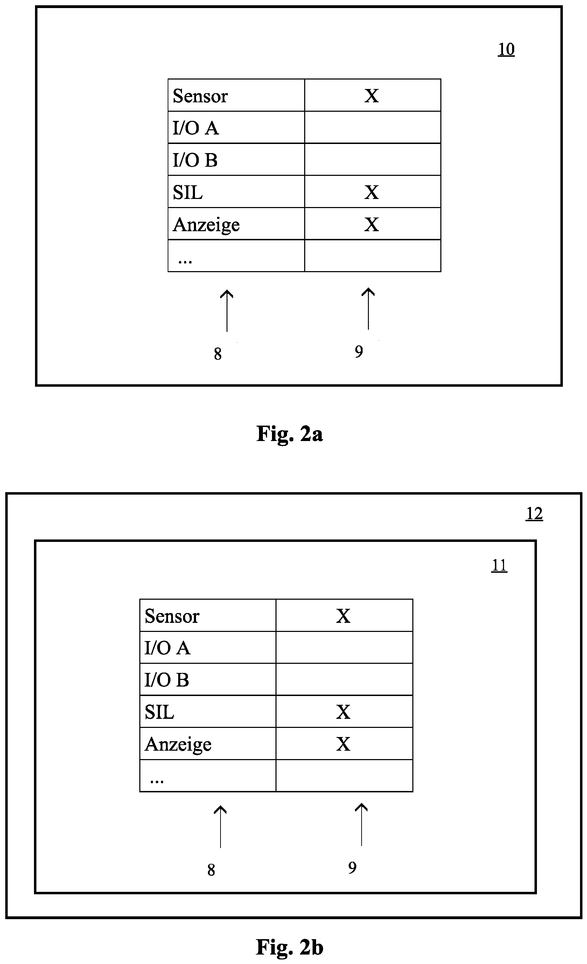

In Fig. 2 ist in Fig. 2a dargestellt, dass die Sperrgruppen 8 zur Auswahl von einer Anzeige 10 des Feldgeräts 2 dargestellt werden. Die Auswahl erfolgt in der rechten Spalte der tabellarischen Auflistung jeweils durch eine Markierung (Kreuz). In Fig. 2b ist hingegen dargestellt, dass die Sperrgruppen 8 von einer Anzeige 11 eines an das Feldgerät 2 anzuschließenden Bediengeräts 12 auswählbar angezeigt werden.

In Fig. 1 ist dargestellt ein Sperrelement 13, es handelt sich hierbei um einen Schalter. Die Recheneinheit 3 wertet den Zustand dieses Sperrelements 13 aus und erst in einem definierten Sperrzustand des Sperrelements 13 werden die in den ausgewählten Sperrgruppen 9 enthaltenen Parameter 5 und/oder Funktionen 6 für eine spätere Veränderung gesperrt. Ferner sperrt die Recheneinheit 3 nach Erkennen des Sperrzustands des Sperrelements 13 auch eine Änderung der ausgewählten Sperrgruppen 9.

In den Fig. 1 und 2 ist gut zu erkennen, dass die Sperrgruppen 8 nach funktionalen Kriterien gegliedert sind und dass unter den auswählbaren Sperrgruppen 8 wenigstens eine Sperrgruppe 8 ist, die Parameter 5 und/oder Funktionen 6 eines der folgenden Bereiche umfasst: Anzeige, Sensor, I/O-Schnittstellen, Sicherheitsfunktionalitäten (SIL).

### Bezugszeichen

- 1: Verfahren
- 2: Feldgerät
- 3: Recheneinheit
- 4: Speicher
- 5: Parameter
- 6: Funktionen
- 7: Tasten
- 8: Sperrgruppen
- 9: Sperrgruppen
- 10: Anzeige des Feldgeräts
- 11: Anzeige eines Bediengeräts
- 12: Bediengerät
- 13: Sperrelement

## Patentansprüche

1. Verfahren (1) zur Konfiguration eines Feldgeräts (2) für den Einsatz im eichpflichtigen Verkehr, wobei das Feldgerät (2) eine Recheneinheit (3) und einen Speicher (4) aufweist, wobei in dem Speicher (4) Parameter (5) und/oder Funktionen (6) abgespeichert sind, wobei die Parameter (5) und/oder Funktionen (6) zumindest teilweise konfigurierbar sind,
**dadurch gekennzeichnet,**
**dass** wenigstens zwei Sperrgruppen (8) bereitgestellt werden, wobei jede Sperrgruppe (8) wenigstens einen eichpflichtigen Parameter (5) und/oder wenigstens eine eichpflichtige Funktion (6) des Feldgeräts (2) umfasst,dass wenigstens eine Sperrgruppe (8) ausgewählt wird,
**dass** die ausgewählten Sperrgruppen (9) von der Recheneinheit (3) ausgewertet werden und
**dass** die Recheneinheit (3) die in den ausgewählten Sperrgruppen (9) enthaltenen eichpflichtigen Parameter (5) und/oder eichpflichtigen Funktionen (6) für eine spätere Veränderung sperrt.

2. Verfahren (1) nach Anspruch 1, **dadurch gekennzeichnet, dass** die Sperrgruppen (8) in dem Speicher des Feldgeräts (2) bereitgestellt werden oder die Sperrgruppen (8) in einem Speicher eines an das Feldgerät (2) anzuschließenden Bediengeräts (12) bereitgestellt werden.

3. Verfahren (1) nach Anspruch 1 oder 2, **dadurch gekennzeichnet, dass** die Sperrgruppen (8) von einer Anzeige des Feldgeräts (2) oder von einer Anzeige eines an das Feldgerät (2) anzuschließenden Bediengeräts (12) auswählbar angezeigt werden.

4. Verfahren (1) nach einem der Ansprüche 1 bis 3, **dadurch gekennzeichnet, dass** die Recheneinheit (3) den Zustand eines Sperrelements (13) des Feldgeräts (2) auswertet und die Recheneinheit (3) erst in einem definierten Sperrzustand des Sperrelements (13) die in den ausgewählten Sperrgruppen (9) enthaltenen Parameter (5) und/oder Funktionen (6) für eine spätere Veränderung sperrt.

5. Verfahren (1) nach Anspruch 4, **dadurch gekennzeichnet, dass** die Recheneinheit (3) nach Erkennen des Sperrzustands des Sperrelements (13) auch eine Änderung der ausgewählten Sperrgruppen sperrt.

6. Verfahren (1) nach einem der Ansprüche 1 bis 5, **dadurch gekennzeichnet, dass** die Sperrgruppen (8) nach funktionalen Kriterien gegliedert sind, dass unter den auswählbaren Sperrgruppen (8) wenigstens eine Sperrgruppe (8) ist, die Parameter (5) und/oder Funktionen (6) eines der folgenden Bereiche umfasst: Anzeige, Sensor, I/O-Schnittstellen, Sicherheitsfunktionalitäten.

7. Verfahren (1) nach einem der Ansprüche 1 bis 6, **dadurch gekennzeichnet, dass** in wenigstens einer übergeordneten Sperrgruppe mehrere Sperrgruppen (8) zusammengefasst sind und durch Auswahl der übergeordneten Sperrgruppe alle Sperrgruppen (8) ausgewählt werden, die in der übergeordneten Sperrgruppe zusammengefasst sind.

8. Feldgerät (2) für den Einsatz im eichpflichtigen Verkehr, wobei das Feldgerät (2) eine Recheneinheit (3) und einen Speicher (4) aufweist, wobei in dem Speicher (4) des Feldgeräts (2) Parameter (5) und/oder Funktionen (6) gespeichert sind, wobei die Parameter (5) und/oder Funktionen (6) zumindest teilweise konfigurierbar sind,
**dadurch gekennzeichnet,**
**dass** in dem Speicher (4) wenigstens zwei Sperrgruppen (8) auswählbar bereitgestellt sind, wobei jede Sperrgruppe (8) wenigstens einen eichpflichtigen Parameter (5) und/oder wenigstens eine eichpflichtige Funktion (6) des Feldgeräts (2) umfasst, wobei die Recheneinheit (3) so programmiert ist, dass nach Auswahl wenigstens einer Sperrgruppe (8), die ausgewählten Sperrgruppen (9) von der Recheneinheit (3) ausgewertet werden und die Recheneinheit (3) die in den ausgewählten Sperrgruppen (9) enthaltenen eichpflichtigen Parameter (5) und/oder eichpflichtigen Funktionen (6) für eine spätere Veränderung sperrt.

9. Feldgerät (2) nach Anspruch 8, **dadurch gekennzeichnet, dass** die Sperrgruppen (8) in dem Speicher des Feldgeräts (2) bereitgestellt sind oder die Sperrgruppen (8) in einem Speicher eines an das Feldgerät (2) anzuschließenden Bediengeräts (12) bereitgestellt sind.

10. Feldgerät (2) nach Anspruch 8 oder 9, **dadurch gekennzeichnet, dass** die Sperrgruppen (8) von einer Anzeige (10) des Feldgeräts (2) oder von einer Anzeige (11) eines an das Feldgerät (2) anschließbaren Bediengeräts (12) auswählbar angezeigt werden.

11. Feldgerät (2) nach einem der Ansprüche 8 bis 10, **dadurch gekennzeichnet, dass** die Recheneinheit (3) so programmiert ist, den Zustand eines Sperrelements (13) des Feldgeräts (2) auszuwerten und erst in einem definierten Sperrzustand des Sperrelements (13) die in den ausgewählten Sperrgruppen (9) enthaltenen Parameter (5) und/oder Funktionen (6) für eine spätere Veränderung zu sperren.

12. Feldgerät (2) nach Anspruch 11, **dadurch gekennzeichnet, dass** die Recheneinheit (3) so programmiert ist, dass sie nach Erkennen des Sperrzustands des Sperrelements (13) auch eine Änderung der ausgewählten Sperrgruppen (9) sperrt.

13. Feldgerät (2) nach einem der Ansprüche 8 bis 12, **dadurch gekennzeichnet, dass** die Sperrgruppen (8) nach funktionalen Kriterien gegliedert sind, dass unter den auswählbaren Sperrgruppen (8) wenigstens eine Sperrgruppe (8) ist, die Parameter (5) und/oder Funktionen (6) eines der folgenden Bereiche umfasst: Anzeige, Sensor, I/O-Schnittstellen, Sicherheitsfunktionalitäten.

14. Feldgerät (2) nach einem der Ansprüche 8 bis 13, **dadurch gekennzeichnet, dass** in wenigstens einer übergeordneten Sperrgruppe mehrere Sperrgruppen (8) zusammengefasst sind und durch Auswahl der übergeordneten Sperrgruppe alle Sperrgruppen (8) ausgewählt werden, die in der übergeordneten Sperrgruppe zusammengefasst sind.

## Claims

1. Method (1) for the configuration of a field device (2) for use in custody transfer, wherein the field device (2) has a computing unit (3) and a storage (4), wherein parameters (5) and/or functions (6) are stored in the storage (4), wherein the parameters (5) and/or functions (6) are at least partially configurable,
**characterized in**
**that** at least two blocking groups (8) are provided, wherein each blocking group (8) comprises at least one parameter (5) and/or at least one function (6) of the field device (2), that at least one blocking group (8) is chosen,
**that** the chosen blocking groups (9) are evaluated by the computing unit (3), and
**that** the computing unit (3) blocks the parameters (5) and/or functions (6) contained in the chosen blocking groups (9) against a subsequent change.

2. Method (1) according to claim 1, **characterized in that** the blocking groups (8) are provided in the storage of the field device (2) or the blocking groups (8) are provided in a storage of a control unit (12) to be connected to the field device (2).

3. Method (1) according to claim 1 or 2, **characterized in that** the blocking groups (8) can be chosen to be displayed by a display of the field device (2) or by a display of a control unit (12) to be connected to the field device (2).

4. Method (1) according to any one of claims 1 to 3, **characterized in that** the computing unit (3) evaluates the state of a blocking element (13) of the field device (2) and the computing unit (3) first blocks the parameters (5) and/or functions (6) contained in the chosen blocking groups (9) against a subsequent change in a defined blocking state of the blocking element (13).

5. Method (1) according to claim 4, **characterized in that** the computing unit (3) also blocks a change of the chosen blocking groups after acknowledging the blocking state of the blocking element (13).

6. Method (1) according to any one of claims 1 to 5, **characterized in that** the blocking groups (8) are organized according to functional criteria, that at least one blocking group (8), which comprises the parameters (5) and/or functions (6) of one of the following areas: display, sensor, I/O-interface, safety functions, is among the blocking groups (8) to be chosen.

7. Method (1) according to any one of claims 1 to 6, **characterized in that** several blocking groups (8) are combined in at least one higher-level blocking group and all blocking groups (8) that are combined in the higher-level blocking group are chosen by choosing the higher-level blocking group.

8. Field device (2) for use in custody transfer, wherein the field device (2) has a computing unit (3) and a storage (4), wherein parameters (5) and/or functions (6) are stored in the storage (4) of the field device (2), wherein the parameters (5) and/or functions (6) are at least partially configurable,
**characterized in**
**that** at least two blocking groups (8) to be chosen are provided in the storage (4), wherein each blocking group (8) comprises at least one parameter (5) and/or at least one function (6) of the field device (2), wherein the computing unit (3) is programmed so that, after choosing at least one blocking group (8), the chosen blocking groups (9) are evaluated by the computing unit (3) and the computing unit (3) blocks the parameters (5) and/or functions (6) contained in the chosen blocking groups (9) against a subsequent change.

9. Field device (2) according to claim 8, **characterized in that** the blocking groups (8) are provided in the storage of the field device (2) or the blocking groups (8) are provided in a storage of a control unit (12) to be connected to the field device (2).

10. Field device (2) according to claim 8 or 9, **characterized in that** the blocking groups (8) can be chosen to be displayed by a display (10) of the field device (2) or by a display (11) of a control unit (12) that can be connected to the field device (2).

11. Field device (2) according to any one of claims 8 to 10, **characterized in that** the computing unit (3)is programmed to evaluate the state of a blocking element (13) of the field device (2) and to first block the parameters (5) and/or functions (6) contained in the chosen blocking groups (9) against a subsequent change in a defined blocking state of the blocking element (13).

12. Field device (2) according to claim 11, **characterized in that** the computing unit (3) is programmed to also block a change of the chosen blocking groups (9) after acknowledging the blocking state of the blocking element (13).

13. Field device (2) according to any one of claims 8 to 12, **characterized in that** the blocking groups (8) are organized according to functional criteria, that at least one blocking group (8), which comprises the parameters (5) and/or functions (6) of one of the following areas: display, sensor, I/O-interface, safety functions, is among the blocking groups (8) to be chosen.

14. Field device (2) according to any one of claims 8 to 13, **characterized in that** several blocking groups (8) are combined in at least one higher-level blocking group and all blocking groups (8) that are combined in the higher-level blocking group are chosen by choosing the higher-level blocking group.

## Revendications

1. Procédé (1) permettant de configurer un appareil de terrain (2) destiné à être utilisé pour des transactions commerciales, dans lequel l'appareil de terrain (2) présente une unité de calcul (3) et une mémoire (4), dans lequel des paramètres (5) et/ou des fonctions (6) sont stockés dans la mémoire (4), dans lequel les paramètres (5) et/ou les fonctions (6) sont au moins partiellement configurables,
**caractérisé en ce que**
au moins deux groupes de blocage (8) sont fournis, chaque groupe de blocage (8) comprenant au moins un paramètre soumis à étalonnage (5) et/ou au moins une fonction soumise à étalonnage (6) de l'appareil de terrain,
au moins un groupe de blocage (8) est sélectionné,
les groupes de blocage (9) sélectionnées sont évalués par l'unité de calcul (3), et
l'unité de calcul (3) bloque les paramètres soumis à étalonnage (5) et/ou les fonctions soumises à étalonnage (6), contenus dans les groupes de blocage (9) sélectionnés, contre toute modification ultérieure.

2. Procédé (1) selon la revendication 1, **caractérisé en ce que** les groupes de blocage (8) sont fournis dans la mémoire de l'appareil de terrain (2), ou les groupes de blocage (8) sont fournis dans une mémoire d'un appareil de commande (12) à connecter à l'appareil de terrain (2).

3. Procédé (1) selon la revendication 1 ou 2, **caractérisé en ce que** les groupes de blocage (8) sont affichés de manière sélectionnable par un affichage de l'appareil de terrain (2) ou par un affichage d'un appareil de commande (12) à connecter à l'appareil de terrain (2).

4. Procédé (1) selon l'une quelconque des revendications 1 à 3, **caractérisé en ce que** l'unité de calcul (3) évalue l'état d'un élément de blocage (13) de l'appareil de terrain (2), et l'unité de calcul (3) ne bloque les paramètres (5) et/ou les fonctions (6) contenus dans les groupes de blocage (9) sélectionnés contre toute modification ultérieure que dans un état de blocage défini de l'élément de blocage (13).

5. Procédé (1) selon la revendication 4, **caractérisé en ce qu'**après identification de l'état de blocage de l'élément de blocage (13), l'unité de calcul bloque aussi une modification des groupes de blocage sélectionnés.

6. Procédé (1) selon l'une quelconque des revendications 1 à 5, **caractérisé en ce que** les groupes de blocage (8) sont divisés selon des critères fonctionnels, **en ce que** parmi les groupes de blocage (8) sélectionnables, il existe au moins un groupe de blocage (8) qui comprend des paramètres (5) et/ou des fonctions (6) d'un des domaines suivants : affichage, capteur, interfaces d'E/S, fonctionnalités de sécurité.

7. Procédé (1) selon l'une quelconque des revendications 1 à 6, **caractérisé en ce que** plusieurs groupes de blocage (8) sont regroupés dans au moins un groupe de blocage d'ordre supérieur, et la sélection du groupe de blocage de niveau supérieur permet de sélectionner tous les groupes de blocage (8) qui sont regroupés dans le groupe de blocage d'ordre supérieur.

8. Appareil de terrain (2) destiné à être utilisé dans des transactions commerciales, dans lequel l'appareil de terrain (2) présente une unité de calcul (3) et une mémoire (4), dans lequel des paramètres (5) et/ou des fonctions (6) sont stockés dans la mémoire (4) de l'appareil de terrain (2), dans lequel les paramètres (5) et/ou les fonctions (6) sont au moins partiellement configurables,
**caractérisé en ce que**
au moins deux groupes de blocage (8) sont fournis de manière sélectionnable dans la mémoire (4), dans lequel chaque groupe de blocage (8) comprend au moins un paramètre soumis à étalonnage (5) et/ou au moins une fonction soumise à étalonnage (6) de l'appareil de terrain (2), dans lequel l'unité de calcul (3) est programmée de telle sorte qu'après sélection d'au moins un groupe de blocage (8), les groupes de blocage (9) sélectionnés sont évalués par l'unité de calcul (3), et l'unité de calcul (3) bloque les paramètres soumis à étalonnage (5) et/ou les fonctions soumises à étalonnage (6), contenus dans les groupes de blocage (9) sélectionnés, contre toute modification ultérieure.

9. Appareil de terrain (2) selon la revendication 8, **caractérisé en ce que** les groupes de blocage (8) sont fournis dans la mémoire de l'appareil de terrain (2), ou les groupes de blocage (8) sont fournis dans une mémoire d'un appareil de commande (12) à connecter à l'appareil de terrain (2).

10. Appareil de terrain (2) selon la revendication 8 ou 9, **caractérisé en ce que** les groupes de blocage (8) sont affichés de manière sélectionnable par un affichage (10) de l'appareil de terrain (2) ou par un affichage (11) d'un appareil de commande (12) à connecter à l'appareil de terrain (2).

11. Appareil de terrain (2) selon l'une quelconque des revendications 8 à 10, **caractérisé en ce que** l'unité de calcul (3) est programmée de façon à évaluer l'état d'un élément de blocage (13) de l'appareil de terrain (2) et pour ne bloquer les paramètres (5) et/ou les fonctions (6) contenus dans les groupes de blocage sélectionnés (9) contre toute modification ultérieure que dans un état de blocage défini de l'élément de blocage (13).

12. Appareil de terrain (2) selon la revendication 11, **caractérisé en ce que** l'unité de calcul (3) est programmée de telle sorte qu'après identification de l'état de blocage de l'élément de blocage (13), elle bloque également une modification des groupes de blocage (9) sélectionnés.

13. Appareil de terrain (2) selon l'une quelconque des revendications 8 à 12, **caractérisé en ce que** les groupes de blocage (8) sont divisés selon des critères fonctionnels, **en ce que** parmi les groupes de blocage (8) sélectionnables il existe au moins un groupe de blocage (8) qui comprend des paramètres (5) et/ou des fonctions (6) d'un des domaines suivants : affichage, capteur, interfaces d'E/S, fonctionnalités de sécurité.

14. Appareil de terrain (2) selon l'une quelconque des revendications 8 à 13, **caractérisé en ce que** plusieurs groupes de blocage (8) sont regroupés dans au moins un groupe de blocage d'ordre supérieur, et la sélection du groupe de blocage d'ordre supérieur permet de sélectionner tous les groupes de blocage (8) qui sont regroupés dans le groupe de blocage d'ordre supérieur.
